# EUROPÄISCHE PATENTSCHRIFT

(11) **EP 1 572 512 B1**
(45) Veröffentlichungstag und Bekanntmachung des Hinweises auf die Patenterteilung: **21.02.2007**
(21) Anmeldenummer: 03785781.0
(22) Anmeldetag: 09.12.2003
(51) Int. Cl.: B60T 11/232, F15B 15/20

(54) **KOLBEN FÜR EINE HYDRAULISCHE BREMSANLAGE UND DAMIT AUSGESTATTETER HAUPTZYLINDER**
PISTON FOR A HYDRAULIC BRAKE SYSTEM AND MASTER CYLINDER PROVIDED THEREWITH
PISTON POUR UN SYSTEME DE FREINAGE HYDRAULIQUE ET MATRE-CYLINDRE POURVU DUDIT PISTON

(30) Priorität: 16.12.2002 DE 10258790
(43) Veröffentlichungstag der Anmeldung: 14.09.2005
(73) Patentinhaber: Lucas Automotive GmbH, 56070 Koblenz (DE)
(72) Erfinder: MALLMANN, Markus, 56291 Pfalzfeld (DE); RUNKEL, Dirk, 56743 Mendig (DE); CHAU, Kam, 56073 Koblenz (DE)
(74) Vertreter: Beyer, Andreas
(86) Internationale Anmeldenummer: PCT/EP2003/013962
(87) Internationale Veröffentlichungsnummer: WO 2004/054863

(56) Entgegenhaltungen:
- EP-A- 0 607 370
- DE-A- 3 932 248
- US-A- 6 065 292

## Beschreibung

Die vorliegende Erfindung betrifft einen Kolben mit einer Ventilanordnung für eine hydraulische Fahrzeugbremsanlage mit einem den Kolben durchsetzenden Kolbenkanal, einem um eine Öffnung des Kolbenkanals herum ausgebildeten Ventilsitz und einem relativ zu dem Kolben verlagerbaren Ventilelement, welches zum Verschließen des Kolbenkanals fluiddicht an dem Ventilsitz anlegbar ist, wobei der Dichtsitz als ringförmiger Vorsprung an einem Dichtbauteil ausgebildet ist, welches ein elastisches Dichtelement und ein dieses stabilisierendes Stützelement aufweist.

Ein derartiger Kolben ist aus der EP 0 607 370 B2 bekannt und wird nach diesem Stand der Technik in einem Hauptbremszylinder einer Fahrzeugbremsanlage eingesetzt. Der Kolben schließt mit dem Hauptbremszylinder eine Druckkammer ein. In einer Bereitschaftsstellung vor einer Bremsbetätigung befindet sich die Ventilanordnung in einer geöffneten Stellung, in welcher die Druckkammer mit einem Hydraulikfluid-Speicher kommuniziert. Wird von einem Fahrer des Fahrzeugs eine Bremsung eingeleitet, so wird der Kolben innerhalb des Hauptbremszylinders verschoben. Dabei schließt sich die Ventilanordnung, indem sich das Ventilelement an den Dichtsitz fluiddicht anlegt, so dass die fluidische Verbindung zwischen der Druckkammer und dem Hydraulikfluid-Speicher unterbrochen wird. Es baut sich in der Folge ein hoher Hydraulikdruck in der Druckkammer auf, der zur Ansteuerung des Fahrzeugbremskreises und zum Aktivieren der Fahrzeugbremsen führt. Bei Beendigung der Bremsung wird der Kolben wieder in seine Bereitschaftsstellung zurück bewegt, wobei sich die Ventilanordnung öffnet und sich der Druck in der Druckkammer abbaut.

In modernen Fahrzeugbremsanlagen kommt es zusätzlich zu der vorstehend beschriebenen bremsungsinduzierten Druckerhöhung ferner dann zu beträchtlichen Druckerhöhungen in der Druckkammer, wenn automatische Bremsdruckerzeugungssysteme aktiviert werden, wie beispielsweise eine Fahrzeug-Traktionskontrolle oder eine Fahrzeug-Stabilitätskontrolle. Derartige automatische Bremsdruckerzeugungssysteme dienen dazu, einen Bremskreis unabhängig von einer aktiven Bremsung durch den Fahrer selektiv anzusteuern, um zur Erhöhung der Fahrzeugsicherheit einzelne Radbremsen zu aktivieren. Die Druckerhöhung in der Druckkammer erfolgt beispielsweise durch eine zusätzliche Hydraulikpumpe. Der so erhöhte Druck muss durch ein Öffnen der Ventilanordnung wieder abgebaut werden.

Es hat sich gezeigt, dass das elastische Dichtelement gemäß dem Stand der Technik in dem Bereich, in dem es dem unter Druck stehenden Hydraulikfluid in der Druckkammer ausgesetzt ist, dazu neigt, sich elastisch zu verformen und insbesondere bei hohen Hydraulikdrücken zu "fließen". Wird nun bei hohem Hydraulikdruck in der Druckkammer der Kolben in seine Bereitschaftsstellung zurück bewegt, so verformt sich zu Beginn der Öffnung der Ventilanordnung, d.h. zu Beginn der Bewegung des Ventilelements, das Dichtelement im Bereich des Dichtsitzes unter der Wirkung des Hydraulikdrucks derart, dass der Dichtsitz expandiert und sich über einen Teil des Hubs des Ventilelements mit diesem mit bewegt. Dieses Verhalten des Dichtelements muss bei der Auslegung der Ventilanordnung berücksichtigt werden. Es ist daher ein hinreichend großer Hub vorzusehen, um trotz der druckbedingten Deformation des Ventilsitzes ein zuverlässiges Öffnen der Ventilanordnung zu gewährleisten. Allerdings muss das Ventilelement diesen Hub auch beim Einleiten einer Bremsung zurücklegen, was das Ansprechen der Bremsanlage verzögert.

Aus der EP 0 607 370 B2 ist es ferner bekannt zur Vermeidung derartiger druckinduzierter Verformungen am Dichtelement ein Zusatzventil vorzusehen, welches die Druckkammer von der Ventilanordnung bei Druckaufbau trennt und dadurch hohe Hydraulikdrücke an der Ventilanordnung unterbindet. Diese Lösung ist jedoch erheblich aufwendiger in der Fertigung und im Betrieb fehleranfälliger.

Die DE 39 32 248 A1 sowie die US 2, 136, 835 zeigen jeweils einen Kolben mit Ventilanordnung, bei welchem das Ventilelement bei Druckaufbau mit einer Ringwulst in das Dichtelement eingedrückt wird. Diese Lösungen sind aufgrund der hohen auf das Dichtelement wirkenden mechanischen Belastungen verschleißanfällig.

Es ist Aufgabe der vorliegenden Erfindung, einen Kolben der eingangs bezeichneten Art bereitzustellen, welcher bei einfachem Aufbau und hoher Verschleißfestigkeit einen schnellen Druckaufbau in der Druckkammer ermöglicht.

Diese Aufgabe wird erfindungsgemäß durch einen Kolben mit einer Ventilanordnung für eine hydraulische Fahrzeugbremsanlage gelöst, wobei der Kolben einen diesen durchsetzenden Kolbenkanal, einen um eine Öffnung des Kolbenkanals herum ausgebildeten Ventilsitz und ein relativ zu dem Kolben verlagerbares Ventilelement aufweist, welches zum Verschließen des Kolbenkanals fluiddicht an den Ventilsitz anlegbar ist, wobei der Dichtsitz als ringförmiger Vorsprung an einem Dichtbauteil ausgebildet ist, welches ein elastisches Dichtelement und ein dieses stabilisierendes Stützelement aufweist. Zur Lösung der vorstehend genannten Aufgabe ist erfindungsgemäß ferner vorgesehen, dass das Stützelement in einem zu dem Dichtvorsprung nahen Bereich mit einer korrespondierenden Ringvertiefung ausgebildet ist.

Die Ringvertiefung hat die Aufgabe, das unter hohem Druck deformierte Material des Dichtelements im Bereich des Dichtsitzes aufzunehmen und somit die Deformation zum Stützelement hin zu richten. Dies wird insbesondere auch dadurch erreicht, dass die Oberfläche des Stützelements im Bereich der Ringvertiefung das Material des Dichtelements besser stabilisiert und formstabiler hält, als dies beim vorstehend beschriebenen Stand der Technik der Fall ist. Das elastische Material des Dichtelements wird von der durch die Ringvertiefung vergrößerten Oberfläche des Stützelements besser armiert als dies beim Stand der Technik der Fall ist.

Eine weitere Steigerung der Formstabilität des Dichtelements lässt sich erfindungsgemäß dadurch erreichen, dass das Dichtelement adhäsiv mit dem Stützelement verbunden ist. Dadurch wird das Deformationsvermögen des Dichtelements weiter reduziert und das Dichtbauteil insgesamt stabilisiert. Die adhäsive Verbindung kann durch Verkleben oder durch Aufvulkanisieren des Dichtelements auf das Stützelement erfolgen.

In einer Weiterbildung der Erfindung ist vorgesehen, dass der ringförmige Dichtvorsprung im Querschnitt betrachtet eine runde Kontur mit zur Druckkammer hin flach auslaufender Flanke aufweist. Durch den runden und stetigen Verlauf der Querschnittskontur des Dichtvorsprungs ergeben sich an diesem keine Druckspitzen, die zu einer lokal konzentrierten starken mechanischen Beanspruchung führen. Die flach auslaufende Flanke sorgt gerade in dem mit hohem Druck beaufschlagten Bereich des Dichtelements für eine ausgewogene Druckverteilung über eine verhältnismäßig große Fläche und damit zu einer Reduzierung der Deformation.

Um auch durch die Gestaltung der Ringvertiefung druck- und deformationsinduzierte mechanische Belastungen möglichst gleichmäßig im Material des Dichtelements zu verteilen, ist in einer Weiterbildung der Erfindung vorgesehen, dass die Ringvertiefung im Querschnitt betrachtet eine runde, vorzugsweise kreissegmentrunde, Kontur aufweist. Alternativ hierzu kann jedoch auch vorgesehen sein, dass die Ringvertiefung im Querschnitt betrachtet eine kantige, vorzugsweise trapezförmige, Kontur aufweist. Im letztgenannten Fall dienen die Kanten als mechanische Widerstände gegen eine Deformation oder ein Fließen des elastischen Dichtelementmaterials.

Vorstehend wurde dargelegt, dass durch die Form der Ringvertiefung das Deformations- und Fließverhalten des Materials des Dichtelements beeinflusst werden kann. Als weitere Maßnahme zur gezielten Steuerung der Deformation des Dichtelements unter Druckbelastung ist in einer Weiterbildung der Erfindung vorgesehen, dass die Ringvertiefung relativ zu dem Dichtvorsprung näher an der Öffnung des Kolbenkanals angeordnet ist. Mit anderen Worten bedeutet dies, dass der Dichtvorsprung relativ zu der Ringvertiefung näher an der Druckkammer liegt. Herrscht nun in der Druckkammer ein hoher Druck, so besteht eine verhältnismäßig hohe Druckdifferenz am Dichtelement zwischen Druckkammer und Kolbenkanal. Diese Druckdifferenz bewirkt eine Deformation des Materials des Ventilelements im Bereich des Dichtvorsprungs in Richtung zum Kolbenkanal hin. Durch die versetzte Anordnung von Dichtvorsprung und Ringvertiefung wird das Material des Dichtvorsprungs zunächst in radialer Richtung in die Ringvertiefung eingedrückt, so dass eine unerwünschte hubvergrößernde Deformation des Dichtelements in axialer Richtung - wie beim Stand der Technik der Fall - unterbunden werden kann.

Hinsichtlich der Ventilanordnung ist in einer Weiterbildung der Erfindung vorgesehen, dass das Ventilelement einen in einem Führungselement geführten Ventilstößel und einen mit dem Dichtsitz zusammenwirkenden Ventilteller aufweist. Ferner kann vorgesehen sein, dass das Führungselement in einem in dem Dichtbauteil vorgesehenen Aufnahmekanal angeordnet ist und dass der Ventilteller eine im wesentlichen ebene Oberfläche aufweist, welche mit dem Dichtsitz zusammenwirkt. Dadurch sind das Ventilelement und das Dichtbauteil bei hoher Funktionalität einfach ausgebildet und mit geringem Aufwand herstellbar. Hinsichtlich der näheren Ausgestaltung des Führungselementes ist in einer Weiterbildung der Erfindung vorgesehen, dass dieses eine den Ventilstößel führende Führungsbuchse aufweist, wobei die Führungsbuchse in dem Dichtbauteil über wenigstens einen Haltesteg, vorzugsweise zentral, gehalten ist und wobei zwischen der Führungsbuchse und dem Dichtbauteil ein Fluidkanal ausgebildet ist.

Um ein zuverlässiges und schnelles Schließen der Ventilanordnung bei einer Bremsung zu gewährleisten, kann erfindungsgemäß ferner vorgesehen sein, dass das Ventilelement über Vorspannmittel in eine Dichtstellung vorgespannt ist, in welcher es an dem Ventilsitz fluiddicht anliegt. Das Ventilelement wird dann in der Bereitschaftsstellung des Kolbens aus seiner Dichtstellung heraus gedrängt und, so dass sich die Ventilanordnung öffnet. In dieser geöffneten Stellung wird das Ventilelement solange gehalten, bis der Kolben zum Druckaufbau in der Druckkammer bewegt wird.

Dann bewirken die Vorspannmittel einen Übergang des Ventilelements in die Dichtstellung unter Reduzierung des Risikos eines Verklemmens oder Blockierens.

Erfindungsgemäß kann das Dichtelement aus einem flexiblen Kunststoff, insbesondere aus einem Elastomer, und das Stützelement aus einem gegenüber dem flexiblen Kunststoff härteren Material, insbesondere aus einem metallischen Werkstoff, ausgebildet sein.

Die Erfindung betrifft ferner eine Hauptbremszylinderanordnung mit einem Hauptzylinder, einem in dem Hauptzylinder verschiebbar geführten Kolben der vorstehend beschriebenen Art, Anschlagmitteln, welche eine vorbestimmte Ausgangsstellung des Kolbens festlegen, und Vorspannmitteln, welche den Kolben in die Ausgangsstellung vorspannen, wobei der Kolben mit dem Hauptzylinder eine Druckkammer einschließt, wobei weiter in der Ausgangsstellung das Ventilelement von dem Dichtsitz abgehoben ist und die Druckkammer über den Kolbenkanal fluidisch mit dem Fluidspeicher verbunden ist und wobei sich bei Verschiebung des Kolbens aus seiner Ausgangsstellung heraus entgegen der Wirkung der Vorspannmittel das Ventilelement an den Dichtsitz anlegt und sich ein Bremsdruck in der Druckkammer aufbaut.

Im folgenden wird die Erfindung beispielhaft anhand der beiliegenden Figuren erläutert. Es stellen dar:
- Fig. 1: einen achsenthaltenden Teilschnitt einer erfindungsgemäßen Hauptzylinderanordnung;
- Fig. 2: eine Draufsicht von links auf den Kolben, und
- Fig. 3: einen in Figur 1 mit III gekennzeichneten vergrößerten Detailausschnitt des Ventilelements.

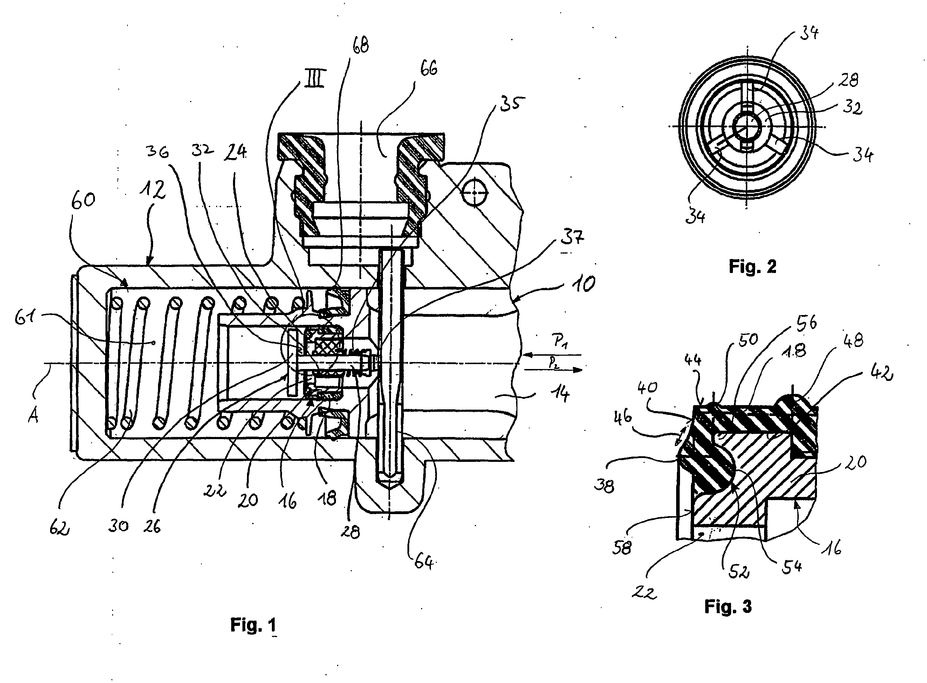

In Figur 1 ist ein erfindungsgemäßer Kolben in einer achsenthaltenden Teilschnittansicht dargestellt und allgemein mit 10 bezeichnet. Der Kolben 10 ist in einem Zylindergehäuse 12 eines Hauptzylinders in Richtung der Achse A beweglich geführt. Der Kolben 10 ist mit einem abgestuften Kolbenkanal 14 ausgeführt, der diesen axial durchsetzt. In dem Kolbenkanal 14 ist ein Dichtbauteil 16 mit Klemmsitzhaftung eingesetzt, welches ein Dichtelement 18 und ein Stützelement 20 aufweist. Die Ausgestaltung des Dichtbauteils 16 wird nachstehend noch im Detail erläutert.

Das Dichtbauteil 16 ist ebenfalls mit einem zentralen abgestuften Durchgangskanal 22 ausgebildet, in welchem ein Führungselement 24 verschiebesicher aufgenommen und eingepresst ist. In dem Führungselement 24 ist ein Ventilelement 26 axialverschiebbar geführt. Das Ventilelement 26 umfasst einen Ventilstößel 28 und einen Ventilteller 30. Zur Führung des Ventilelements 26 in dem Führungselement 24 ist der Ventilstößel 28 in einer korrespondierenden Führungsbuchse 32 des Führungselements 24 mit geringem Spiel aufgenommen (siehe Fig. 2). Die Führungsbuchse 32 ist über Haltestege 34 in dem Durchgangskanal 22 des Dichtbauteils 16 eingepresst und darin axial gehalten. Über eine Rückstellfeder 35, die zwischen der Führungsbuchse 32 und dem mit einer Sicherungsscheibe 37 versehenen freien Ende des Ventilstößels 28 angeordnet ist, ist das Ventilelement 26 derart vorgespannt, dass der Ventilteller 30 mit seiner Unterseite 36 in Anlage mit einem Ventilsitz 38 an der dem Ventilteller 30 zugewandten Stirnseite 40 gedrängt wird.

Zur genaueren Beschreibung des Dichtbauteils 16 wird auf Fig. 3 verwiesen, welche den mit III bezeichneten Teilausschnitt aus Fig. 1 vergrößert zeigt. Das Dichtbauteil 16 umfasst das Dichtelement 18 und das Stützelement 20. Beide sind an ihrer gemeinsamen Kontaktfläche 42 adhäsiv miteinander verbunden, beispielsweise durch Aufvulkanisieren des Dichtelements 18 auf das Stützelement 20 oder durch gegenseitiges Verkleben.

Das Dichtelement 18 weist an seiner Stirnfläche 40 den als ringförmigen Dichtvorsprung ausgebildeten Ventilsitz 38 auf. Dessen Kontur verläuft - im achsenthaltenden Querschnitt betrachtet - ausgehend von der dem Durchgangskanal 22 zugewandten radial innen liegenden Seite im wesentlichen kreissegmentförmig und läuft dann in dem mit 46 bezeichneten Bereich mit abflachender Flanke aus. Das Dichtelement 18 weist an seiner Außenumfangsfläche 44 ferner mehrere in Umfangsrichtung umlaufende wulstförmige Dichtvorsprünge 48 und einen nahe dem Ventilsitz angeordneten in Umfangsrichtung umlaufenden wulstförmigen Stützvorsprung 50 auf. Die Dichtvorsprünge 48 dienen dazu, das Dichtbauteil 16 unter Klemmsitz und fluiddicht in den Kolben 10 einpressen zu können, wie in Fig. 1 gezeigt. Der Stützvorsprung 50 stabilisiert den Bereich der Stirnseite 40 des Dichtelements 18 zusätzlich, indem er sich an der Innenwand des Kolbenkanals 14 abstützt.

Das Stützelement 20 weist in seinem der Stirnseite 40 zugewandten Stirnbereich 52 eine in Umfangsrichtung um die Achse verlaufende Ringvertiefung 54 auf. Die Ringvertiefung 54 besitzt - im achsenthaltenden Querschnitt betrachtet - größtenteils kreissegmentrunde Kontur mit harmonisch abgerundeten Übergängen. Die Ringvertiefung 54 ist mit elastischem Material des Dichtelements 18 aufgefüllt. In seinem radial äußeren Bereich weist das Stützelement 20 eine umlaufende Stabilisierungskante 56 auf, welche den radial äußeren Bereich des Dichtelements 18 stabilisiert. Im radial innenliegenden Bereich des Dichtbauteils 16 ist ein Stirnflächenabschnitt 58 des Stützelements 20 nicht von dem Material des Dichtelements 18 bedeckt.

Wendet man sich wiederum Figur 1 zu so erkennt man, dass der Kolben 10 in einem einseitig geschlossenen zylindrischen Hohlraum 60 des Zylindergehäuses 12 aufgenommen ist und mit dem Zylindergehäuse 12 eine mit Hydraulikfluid gefüllte Druckkammer 61 einschließt. Der Kolben 10 wird über eine Feder 62 in Fig. 1 in Richtung nach rechts in seine in Fig. 1 gezeigte Bereitschaftsstellung vorgespannt und liegt somit unter Vorspannung an einem Anschlagbolzen 64 an, der quer durch das Zylindergehäuse 12 läuft und in diesem fixiert ist. In dem Zylindergehäuse 12 ist ein Verbindungsanschluss 66 vorgesehen, über welchen der Hohlraum 60 mit einem nicht gezeigten Fluidreservoir kommuniziert. Ferner weist das Zylindergehäuse 12 einen nicht gezeigten weiteren Verbindungsanschluss auf, über welchen die Druckkammer 61 mit dem Bremskreis eines Kraftfahrzeugs verbunden ist.

Am Außenumfang des Kolbens 10 ist eine Fluiddichtung 68 vorgesehen, die eine Fluidströmung entlang des Außenumfangs des Kolbens 10 bei dessen Axialbewegung in dem Zylindergehäuse 12 unterbindet und somit eine fluiddichte Führung des Kolbens in dem Zylinder erlaubt.

Die Anordnung gemäß Fig. 1 funktioniert wie folgt. Vor Initiierung einer Bremsung durch den Fahrer befindet sich der Kolben 10 in seiner in Fig. 1 gezeigten Bereitschaftsstellung. In dieser Bereitschaftsstellung wird der Kolben 10 durch die Feder 62 gegen den Anschlagbolzen 64 gedrückt. Dabei drückt der Ventilstößel 28 mit seinem freien Ende gegen den Anschlagbolzen 64. Die Federkraft der Feder 62 übersteigt die Federkraft der Rückstellfeder 35, so dass das Ventilelement 26 seine in Fig. 1 gezeigte geöffnete Stellung einnimmt, in welcher der Ventilteller 30 von dem Ventilsitz 38 abgehoben ist. Dadurch ist die Druckkammer 61 mit dem druckkammerfernen Ende des Kolbenkanals 14 fluidisch verbunden.

Bei einer Betätigung der Bremse wird der Kolben 10 in Fig. 1 gemäß Pfeil P₁ nach links verschoben. Dabei nähert sich der Ventilteller 30 mehr und mehr dem Ventilsitz 38 an, bis beide schließlich in Kontakt treten. Von da an baut sich bei einer weiteren Kolbenbewegung in Richtung Pfeil P₁ ein Überdruck in der Druckkammer 61 auf, welcher zum Bremskreis weitergeleitet wird. Bei Beendigung des Bremsvorganges bewegt sich der Kolben 10 entsprechend Pfeil P₂ zurück in seine in Figur 1 gezeigte Ausgangsstellung. Das Ventilelement 26 nimmt dabei auch wieder seine in Fig. 1 gezeigte geöffnete Stellung ein.

Unter dem wachsenden Hydraulikdruck wird das Ventilelement 26, genauer gesagt dessen Ventilteller 30 zunehmend stark auf den Ventilsitz 38 gedrückt, so dass sich der Ventilsitz 38 unter diesem Druck deformiert. Ferner wirkt das unter dem Überdruck stehende Hydraulikfluid auf den mit diesem in Kontakt stehenden Flankenbereich 46, welcher sich dadurch ebenfalls deformiert. Bei sehr hohen Hydraulikdrücken kommt es sogar zu einem Fließen des Materials des Dichtelements 18 in diesem Bereich.

Aufgrund der Gestaltung des Flankenbereichs 46 und des Stirnbereichs 52 des Stützelements 20 führt die vorstehend angesprochene Deformation jedoch nicht dazu, dass sich bei einem Abheben des Ventiltellers 30 von dem Dichtsitz 38 unter hohem Druck in der Druckkammer 61 der Dichtsitz 38 in axialer Richtung entsprechend Pfeil P₁ deformiert und aufgrund dieser axialgerichteten Deformation ein schnelles Lösen von Ventiltellerunterseite 36 und Dichtsitz 38 zwecks schnellem Druckabbau in der Druckkammer 61 verhindert. Stattdessen verformt sich das Material des Dichtelements 18 unter dem Druck des Hydraulikfluids in der Druckkammer 61 derart, dass es in die Ringvertiefung 54 eindringt und von dieser sich weiter nach radial innen verlagert. Der flache Verlauf der Flanke 46 bewirkt darüber hinaus ein schnelles Lösen von Ventiltellerunterseite 36 und Ventilsitz 38. Somit gewährleistet die Erfindung selbst bei hohen Hydraulikdrücken in der Druckkammer 61 ein schnelles Abheben des Ventiltellers 30 von dem Ventilsitz 38 auch bei geringem Hub des Ventilelements 26. Dadurch lässt sich das Ansprechverhalten des Bremssystems verbessern.

Die Erfindung zeigt eine einfache und dennoch wirksame Möglichkeit für die Gestaltung des Kolbens mit Zentralventil für eine Fahrzeugbremsanlage, welcher auch bei hohen Hydraulikdrüdken in der Druckkammer-gegebenenfalls verursacht durch ein automatisches System wie beispielsweise eine Traktionskontrolle oder ein Stabilitätsprogramm - einen schnellen Druckabbau bei Beendigung der Bremsung gewährleistet. Dies wird insbesondere durch Maßnahmen hinsichtlich der Gestaltung des Ventilsitzes erreicht, so dass eine ungewünschte hydraulikdruckbedingte Deformation des Ventilsitzes weitgehend unterdrückt werden kann.

## Patentansprüche

1. Kolben (10) mit einer Ventilanordnung für eine hydraulische Fahrzeugbremsanlage mit:
einem den Kolben (10) durchsetzenden Kolbenkanal (14),
einem um eine Öffnung (22) des Kolbenkanals (14) herum ausgebildeten Ventilsitz (38) und
einem relativ zu dem Kolben (10) verlagerbaren Ventilelement (26), welches zum Verschließen des Kolbenkanals (14) fluiddicht an dem Ventilsitz (38) anlegbar ist, wobei der Ventilsitz (38) als ringförmiger Vorsprung an einem Dichtbauteil (16) ausgebildet ist, welches ein elastisches Dichtelement (18) und ein dieses stabilisierendes Stützelement (20) aufweist,
**dadurch gekennzeichnet, dass** das Stützelement (20) in einem zu dem Dichtvorsprung (38) nahen Bereich mit einer korrespondierenden Ringvertiefung (54) ausgebildet ist.

2. Kolben nach Anspruch 1,
**dadurch gekennzeichnet, dass** das Dichtelement (18) adhäsiv mit dem Stützelement (20) verbunden ist.

3. Kolben nach Anspruch 1 oder 2,
**dadurch gekennzeichnet, dass** der ringförmige Dichtvorsprung (38) im Querschnitt betrachtet eine runde Kontur mit zu einer Druckkammer (61) hin flach auslaufender Flanke (46) aufweist.

4. Kolben nach Anspruch 3,
**dadurch gekennzeichnet, dass** die Ringvertiefung (54) im Querschnitt betrachtet eine runde, vorzugsweise kreissegmentrunde, Kontur aufweist.

5. Kolben nach Anspruch 3,
**dadurch gekennzeichnet, dass** die Ringvertiefung im Querschnitt betrachtet eine kantige, vorzugsweise trapezförmige, Kontur aufweist.

6. Kolben nach einem der vorhergehenden Ansprüche,
**dadurch gekennzeichnet, dass** die Ringvertiefung (54) relativ zu dem Dichtvorsprung (38) näher an der Öffnung (22) des Kolbenkanals (14) angeordnet ist.

7. Kolben nach einem der vorhergehenden Ansprüche,
**dadurch gekennzeichnet, dass** das Ventilelement (26) einen in einem Führungselement (24) geführten Ventilstößel (28) und einen mit dem Dichtsitz (38) zusammenwirkenden Ventilteller (30) aufweist.

8. Kolben nach Anspruch 7,
**dadurch gekennzeichnet, dass** das Führungselement (24) in einem in dem Dichtbauteil (16) vorgesehenen Aufnahmekanal (22) angeordnet ist und dass der Ventilteller (30) eine im wesentlichen ebene Oberfläche (36) aufweist, welche mit dem Dichtsitz (38) zusammenwirkt.

9. Kolben nach Anspruch 7 oder 8,
**dadurch gekennzeichnet, dass** das Führungselement (24) eine den Ventilstößel (28) führende Führungsbuchse (32) aufweist, wobei die Führungsbuchse (32) in dem Dichtbauteil (16) über wenigstens einen Haltesteg (34), vorzugsweise zentral, gehalten ist und wobei zwischen der Führungsbuchse (32) und dem Dichtbauteil (16) ein Fluidkanal (22) ausgebildet ist.

10. Kolben nach einem der vorhergehenden Ansprüche,
**dadurch gekennzeichnet, dass** das Ventilelement (26) über Vorspannmittel (35) in eine Dichtstellung vorgespannt ist, in welcher es an dem Ventilsitz (38) fluiddicht anliegt.

11. Kolben nach einem der vorhergehenden Ansprüche,
**dadurch gekennzeichnet, dass** das Dichtelement (18) aus einem flexiblen Kunststoff, insbesondere aus einem Elastomer, ausgebildet ist und dass das Stützelement (20) aus einem gegenüber dem flexiblen Kunststoff härteren Material, insbesondere aus einem metallischen Werkstoff, ausgebildet ist.

12. Hauptzylinderanordnung für eine hydraulische Fahrzeugbremsanlage mit
- einem Hauptzylinder (12),
- einem in dem Hauptzylinder (12) verschiebbar geführten Kolben (10) nach einem der vorhergehenden Ansprüche,
- Anschlagmitteln (64), welche eine vorbestimmte Ausgangsstellung des Kolbens (10) festlegen, und
- Vorspannmitteln (62), welche den Kolben (10) in die Ausgangsstellung vorspannen,
wobei der Kolben (10) mit dem Hauptzylinder (12) eine Druckkammer (61) einschließt,
wobei weiter in der Ausgangsstellung das Ventilelement (26) von dem Ventilsitz (38) abgehoben ist und die Druckkammer (61) über den Kolbenkanal (14) fluidisch mit einem Fluidspeicher verbunden ist,
und wobei sich bei Verschiebung des Kolbens (10) aus seiner Ausgangsstellung heraus entgegen der Wirkung der Vorspannmittel (62) das Ventilelement (26) an den Dichtsitz (38) anlegt und sich ein Bremsdruck in der Druckkammer (61) aufbaut.

## Claims

1. Piston (10) having a valve arrangement for a vehicle hydraulic brake system, comprising:
a piston channel (14) penetrating the piston (10),
a valve seat (38) formed around an opening (22) of the piston channel (14) and
a valve element (26), which is displaceable relative to the piston (10) and which for sealing the piston channel (14) is adapted to be positioned in a fluid-tight manner against the valve seat (38),
wherein the valve seat (38) takes the form of an annular projection on a sealing component (16), which comprises an elastic sealing element (18) and a support element (20) stabilising the sealing element (18),
**characterized in that** the support element (20) is designed in a region close to the sealing projection (38) with a corresponding annular recess (54).

2. Piston according to claim 1,
**characterized in that** the sealing element (18) is connected adhesively to the support element (20).

3. Piston according to claim 1 or 2,
**characterized in that** the annular sealing projection (38), viewed in cross section, has a round contour with a flank (46) running out shallowly in the direction of a pressure chamber (61).

4. Piston according to claim 3,
**characterized in that** the annular recess (54), viewed in cross section, has a round, preferably circular-segment-round, contour.

5. Piston according to claim 3,
**characterized in that** the annular recess, viewed in cross section, has a polygonal, preferably trapezoidal, contour.

6. Piston according to one of the preceding claims,
**characterized in that** the annular recess (54) is disposed, in relation to the sealing projection (38), closer to the opening (22) of the piston channel (14).

7. Piston according to one of the preceding claims,
**characterized in that** the valve element (26) comprises a valve tappet (28) guided in a guide element (24) and a valve disc (30) interacting with the sealing seat (38).

8. Piston according to claim 7,
**characterized in that** the guide element (24) is disposed in a receiving channel (22) provided in the sealing component (16) and that the valve disc (30) has a substantially flat surface (36) interacting with the sealing seat (38).

9. Piston according to claim 7 or 8,
**characterized in that** the guide element (24) comprises a guide bush (32) guiding the valve tappet (28), the guide bush (32) being held, preferably centrally, in the sealing component (16) by means of at least one retaining web (34), and a fluid channel (22) being formed between the guide bush (32) and the sealing component (16).

10. Piston according to one of the preceding claims,
**characterized in that** the valve element (26) is biased by biasing means (35) into a sealing position, in which it lies in a fluid-tight manner against the valve seat (38).

11. Piston according to one of the preceding claims,
**characterized in that** the sealing element (18) is formed from a flexible plastics material, in particular from an elastomer, and that the support element (20) is formed from a material that is harder than the flexible plastics material, in particular from a metal material.

12. Master cylinder arrangement for a vehicle hydraulic brake system comprising
- a master cylinder (12),
- a piston (10) according to one of the preceding claims, which is guided in the master cylinder (12),
- stop means (64) that define a predetermined normal position of the piston (10), and
- biasing means (62) that bias the piston (10) into the normal position,
wherein the piston (10) together with the master cylinder (12) encloses a pressure chamber (61),
wherein moreover in the normal position the valve element (26) is lifted off the valve seat (38) and the pressure chamber (61) is fluidically connected by the piston channel (14) to a fluid reservoir,
and wherein, upon a displacement of the piston (10) out of its normal position counter to the action of the biasing means (62), the valve element (26) positions itself against the sealing seat (38) and a brake pressure builds up in the pressure chamber (61).

## Revendications

1. Piston (10) pourvu d'un ensemble soupape pour un système de freinage hydraulique de véhicule, comprenant :
un canal (14) traversant le piston (10),
un siège de soupape (38) formé autour d'une ouverture (22) dudit canal (14) et
un élément de soupape (26) pouvant se déplacer par rapport au piston (10) et pouvant venir reposer sur le siège de soupape (38) pour obturer ledit canal (14) de façon étanche, le siège de soupape (38) étant conçu sous forme de saillie annulaire formée sur une structure d'étanchéité (16), laquelle structure présente un élément d'étanchéité élastique (18) et un élément d'appui (20) stabilisant ce dernier,
**caractérisé en ce que**, dans une zone proche de la saillie d'étanchéité (39), l'élément d'appui (20) est pourvu d'un évidement annulaire (54) correspondant.

2. Piston selon la revendication 1,
**caractérisé en ce que** l'élément d'étanchéité (18) est relié par adhésion à l'élément d'appui (20).

3. Piston selon la revendication 1 ou 2,
**caractérisé en ce que**, vue en coupe transversale, la saillie d'étanchéité annulaire (38) présente un contour rond doté d'un flanc (46) allant s'aplatissant vers une chambre de pression (61).

4. Piston selon la revendication 3,
**caractérisé en ce que**, vu en coupe transversale, l'évidement annulaire (54) présente un contour rond, de préférence un contour en forme de segment de cercle.

5. Piston selon la revendication 3,
**caractérisé en ce que**, vu en coupe transversale, l'évidement annulaire présente un contour à arêtes, de préférence un contour de forme trapézoïdale.

6. Piston selon l'une des revendications précédentes,
**caractérisé en ce que** l'évidement annulaire (54) est, par rapport à la saillie d'étanchéité (38), disposé plus près de l'ouverture (22) du canal (14) du piston.

7. Piston selon l'une des revendications précédentes,
**caractérisé en ce que** l'élément de soupape (26) présente un poussoir de soupape (28) guidé dans un élément de guidage (24) et une tête de soupape (30) coopérant avec le siège de soupape (38).

8. Piston selon la revendication 7,
**caractérisé en ce que** l'élément de guidage (24) est disposé dans un canal récepteur (22) prévu dans la structure d'étanchéité (16) et **en ce que** la tête de soupape (30) présente une surface (36) pour l'essentiel plane, laquelle surface coopère avec le siège d'étanchéité (38).

9. Piston selon la revendication 7 ou 8,
**caractérisé en ce que** l'élément de guidage (24) présente une douille conductrice (32) guidant le poussoir (28), ladite douille (32) étant maintenue, de préférence au centre, dans la structure d'étanchéité (16) par au moins une branche de maintien (34), et un canal fluidique étant formé entre la douille conductrice (32) et la structure d'étanchéité (16).

10. Piston selon l'une des revendications précédentes,
**caractérisé en ce que** l'élément de soupape (26) est précontraint par l'intermédiaire de moyens de précontrainte (35) dans une position d'étanchéité dans laquelle ledit élément de soupape repose de façon étanche sur le siège de soupape (38).

11. Piston selon l'une des revendications précédentes,
**caractérisé en ce que** l'élément d'étanchéité (18) est constitué d'un matériau plastique souple, notamment d'un élastomère, et **en ce que** l'élément d'appui (20) est constitué par rapport au matériau plastique souple d'une matière plus dure, notamment d'un matériau métallique.

12. Ensemble maître-cylindre pour un système de freinage hydraulique de véhicule, comprenant
- un maître-cylindre (12),
- un piston (10) selon l'une des revendications précédentes, guidé de façon à pouvoir se déplacer dans le maître-cylindre (12),
- des moyens de butée (64), lesquels définissent une position initiale prédéterminée du piston (10), et
- des moyens de précontrainte (62), à l'aide desquels le piston (10) est précontraint dans sa position initiale,
le piston (10) ceignant avec le maître-cylindre (12) une chambre de pression (61), l'élément de soupape (26) étant - encore en position initiale - soulevé du siège de soupape (38) et la chambre de pression (61) étant fluidiquement reliée par le canal (14) du piston à un réservoir à fluide,
et l'élément de soupape (26) venant reposer sur le siège de soupape (38) et une pression de freinage se formant dans la chambre de pression (61) dès que le piston (10) quitte sa position initiale pour se déplacer dans le sens contraire au sens d'agissement des moyens de précontrainte (62).
